Europäisches Patentamt

European Patent Office

Office européen des brevets

(11) Publication number: **0 509 679 A2**

# EUROPEAN PATENT APPLICATION

(21) Application number: **92302878.1**

(22) Date of filing: **01.04.92**

(51) Int. Cl.⁵: **B60Q 1/26**

(30) Priority: **16.04.91 GB 9108033**

(43) Date of publication of application:
**21.10.92 Bulletin 92/43**

(84) Designated Contracting States:
**DE FR GB IT**

(71) Applicant: **BRITAX VEGA LIMITED**
**Kingswood Road, Hampton Lovett Industrial Estate**
**Droitwich, Worcestershire WR9 0OH(GB)**

(72) Inventor: **Thompson, Francis**
**19 Cherry Orchard**
**Holt Heath, Worcester WR6 6ND(GB)**

(74) Representative: **Hollinghurst, Antony**
**B.S.G. International plc Patent Department**
**Castle Trading Estate East Street**
**Portchester, Hampshire PO16 9SD(GB)**

(54) **Vehicle Lamp.**

(57) A vehicle lamp comprising a light source (10) and a Fresnel lens (12) arranged to collimated light from the light source (10). The Fresnel lens (12) has a zone (16) carrying annular reflecting prism formations (18), and a concave reflector (26) positioned surrounding the light source (10) and extending towards the periphery of the lens (12). The reflector (26) is shaped so as to reflect light from the light source (10) on to the radially outer faces of the reflecting prism formations (18) at an angle such that it is collimated by the reflecting prism formations (18).

Fig. 1.

This invention relates to a vehicle lamp comprising a light source and a Fresnel lens arranged to collimate light from the light source, the Fresnel lens having an outer zone, carrying annular reflecting prism formations.

This type of lamp suffers from the disadvantage that the outer reflecting prism formations appear less bright than the refracting prism formations locating closer to the optical axis of the lens. This effect is particularly marked on wide lamps where the focal length of the lens is substantially less than the width of the lamp.

US-A-4972302 disclosed a lamp of this type in which an attempt is made to increase the brightness of the peripheral zones of the lamp by providing a plane reflector behind the light source perpendicular to the optical axis of the lens. The reflector is so positioned that the virtual image of the light source is at the focus of the lens. This lamp suffers from the disadvantage that light from the light source which is directly incident on the lens, without being reflected in the reflector, is not correctly collimated because the light source itself is not positioned at the focus of the lens.

According to the invention, in a lamp of the type described above, a concave reflector is positioned surrounding the light source and extending towards the periphery of the lens, the reflector being shaped so as to reflect light from the light source on to the radially outer faces of the reflecting prism formations at an angle such that it is collimated by the reflecting prism formations.

In a preferred form of the invention, the reflecting prism formations have their radially inner faces oriented at equal and opposite angles to the optical axis of the lens as their radially outer faces and the concave reflector is of ellipsoidal shape with a first focus of the ellipse coincident with the focus of the Fresnel lens and a second focus of the ellipse on the opposite side of the Fresnel lens to the first focus and at an equal distance therefrom.

An embodiment of the invention will be described by way of example, with reference to the accompanying drawings, in which:

Figure 1 is a cross-sectional view of a vehicle lamp in accordance with the invention; and

Figure 2 is an enlarged cross-sectional view of one of the prism formations of the collimating lens of the lamp shown in Figure 1.

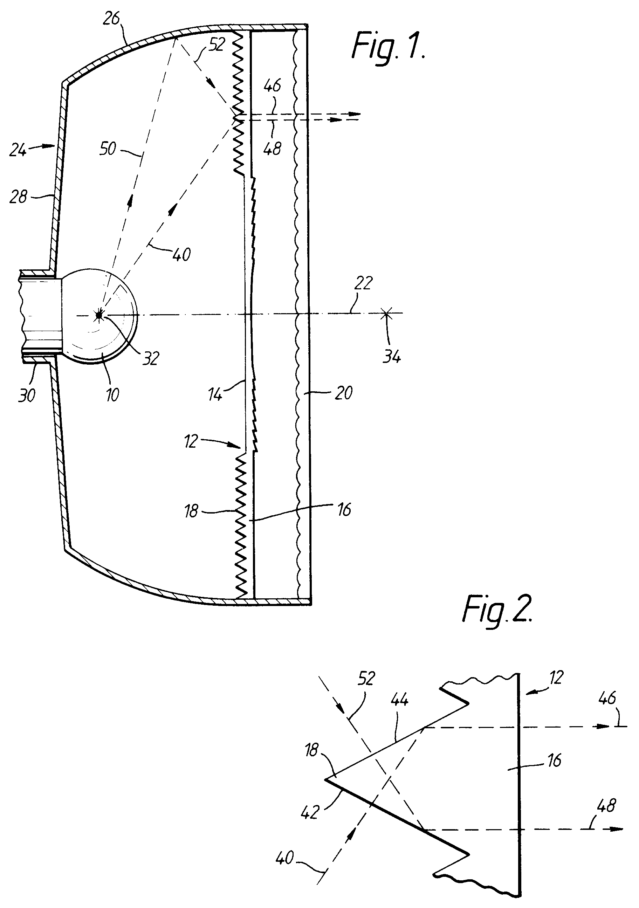

Referring to Figure 1, a vehicle lamp in accordance with the invention has a bulb 10 located at the focus of a Fresnel lens 12 having a central zone 14 with annular refracting Fresnel prism formations on its outer surface, and a peripheral zone 16 with annular reflecting Fresnel prism formations 18 on its inner surface. The refracting prism formations in the zone 14 are of conventional design and will not be described in detail.

On the opposite side of the lens 12 to the light source 10, there is an outer lens 20 carrying an array of spherical lens elements which disburse collimated light from the Fresnel lens 12 over a pre-determined angle. The lens 20 is also of conventional design.

In accordance with the invention, angle between the radially inner face each of the reflecting prism formations 18 and the optical axis 22 of the lens 12 is equal but opposite to the angle between the radially outer face such reflecting prism formation 18 and the optical axis 22 of the lens 12. The light source 10 and the two lens 12 and 20 are mounted in a housing 24 which includes a wall 26 having a concave reflector of ellipsoidal shape on its inner surface between the lens 12 and its boundary with a substantially flat wall 28 which has central recess 30 for receiving a lamp holder (not shown) for the bulb 10. The ellipsoidal reflector on the inner surface of the wall 26 has one focus at a point 32 coincident with the filament of the bulb 10 and its other focus at a point 34 on the optical axis 22, with the Fresnel lens 14 at the mid point between the two foci.

Figure 2 shows a cross-section through one of the reflecting Fresnel prism formations 18. A ray of light, indicated by the dotted line 40, is incident on the radially inner surface 42 of the prism formation 18 where it is refracted through a relatively small angle. It is then reflected by the radially outer surface 44 of the prism formation 18 in a direction parallel to the optical axis 22 as indicated by the dotted line 46.

Another ray of light from the light source 10, indicated by a dotted line 50 in Figure 1, is reflected by the ellipsoidal reflector on the wall 26 in the direction indicated by the dotted line 52. It is then incident on the upper surface 44 of the prism formation 18, where it is refracted through a small angle and then reflected by the radially inner surface 42 in a direction parallel to the optical axis of the lamp as illustrated by the dotted line 48.

The outer zone 16 of the lens 12 therefore receives a substantial amount of reflected light from the reflector on the wall 26, in addition to the directly incident light. The overall level of illumination of the outer lens 20 therefore appears to be more uniform.

## Claims

1. A vehicle lamp comprising a light source (10) and a Fresnel lens (12) arranged to collimated light from the light source (10), the Fresnel lens (12) having a zone (16) carrying annular reflecting prism formations (18), characterised in that a concave reflector (26) is positioned surrounding the light source (10) and extending towards the periphery of the lens (12), the reflector (26) being shaped so as to reflect light from the light source (10) on to the radially outer faces of the reflecting prism formations (18) at an angle such that it is collimated by the reflecting prism formations (18).

2. A vehicle lamp according to claim 1, wherein the reflecting prism formations (18) have their radially inner faces oriented at equal and opposite angles to the optical axis of the lens (12) as their radially outer faces and the convex reflector (26) is of ellipsoidal shape with a first focus (32) of the ellipse coincident with the focus of the Fresnel lens (12) and a second focus (34) of the ellipse on the opposite side of the Fresnel lens (12) to the first focus (32) and at an equal distance therefrom.

3. A vehicle lamp according to claim 1 or 2, wherein the Fresnel lens (12) has an inner zone (14) carrying annular refracting prism formations, said inner zone (14) being nearer to the optical axis of the lens (12) than the zone (16) carrying annular reflecting prism formations (18).

EP 0 509 679 A2

Fig.1.

Fig.2.

4